**Europäisches Patentamt**

**European Patent Office**

**Office européen des brevets**

(19)

(11)  **EP 1 056 690 B1**

(12)  **EUROPÄISCHE PATENTSCHRIFT**

(45) Veröffentlichungstag und Bekanntmachung des Hinweises auf die Patenterteilung:
**06.05.2004  Patentblatt 2004/19**

(51) Int Cl.⁷: $C04B\ 37/00$, $C04B\ 35/58$, $C04B\ 35/593$, $F23Q\ 7/00$, $H05B\ 3/14$

(21) Anmeldenummer: **99964437.0**

(22) Anmeldetag: **13.12.1999**

(86) Internationale Anmeldenummer:
**PCT/DE1999/003968**

(87) Internationale Veröffentlichungsnummer:
**WO 2000/035830 (22.06.2000 Gazette 2000/25)**

(54) **VERFAHREN ZUR HERSTELLUNG EINES STIFTHEIZERS**

METHOD FOR PRODUCING A PIN HEATER

PROCEDE DE PRODUCTION D'UNE TIGE CHAUFFANTE

(84) Benannte Vertragsstaaten:
**DE ES FR GB IT SE**

(30) Priorität: **16.12.1998  DE 19857958**

(43) Veröffentlichungstag der Anmeldung:
**06.12.2000  Patentblatt 2000/49**

(73) Patentinhaber: **ROBERT BOSCH GMBH**
**70442 Stuttgart (DE)**

(72) Erfinder:
 • **KNOLL, Guenter**
  **D-70195 Stuttgart (DE)**
 • **LINDEMANN, Gert**
  **D-72805 Lichtenstein (DE)**
 • **AICHELE, Wilfried**
  **D-71364 Winnenden (DE)**
 • **LINDNER, Friederike**
  **D-70839 Gerlingen (DE)**
 • **SCHLACHTA, Harry**
  **D-70839 Gerlingen (DE)**

(56) Entgegenhaltungen:
**DE-A- 19 722 321      DE-C- 19 860 919**

**Beschreibung**

Die Erfindung betrifft ein Verfahren zur Herstellung eines Stiftheizers, der eine im wesentlichen innenliegende Isolationsschicht und eine außenliegende Leitschicht aufweist, wobei beide Schichten ein keramisches Verbundgefüge umfassen.

Stand der Technik

Aus der DE 35 19 437 C2 und der DE 37 34 274 C sind Verfahren zur Herstellung eines Stiftheizers aus Kompositmaterialien auf der Basis von Trisiliziumtetranitrid, $Si_3N_4$, und Molybdänsilizid, $MoSi_2$, in axialer Heißpreßtechnik mit separaten eingesinterten Stromzuleitungsdrähten bekannt. Bei diesen Stiftheizern wird ihr komplizierter Aufbau sowie das aufwendige Herstellungsverfahren, bei dem eine Grünbearbeitung des Stiftes vor der Sinterung nicht möglich ist, sondern nur eine Hartbearbeitung mit Diamantwerkzeugen nach der Sinterung, als nachteilig angesehen.

In der EP 0 721 925 wird ein Verfahren zur Herstellung eines dichten Siliziumnitrid-Kompositwerkstoffs beschrieben. Dieser Werkstoff ist zwar hochtemperaturfest, jedoch können durch das Herstellungsverfahren keine elektrisch leitfähigen Komposite realisiert werden.

In der EP 0 601 727 wird ein Verfahren zur Herstellung eines Stiftheizers aus $Si_3N_4/MoSi_2$ -Kompositen beschrieben. Er kann durch Heißpressen oder Sintern unter $10^5$ Pa Stickstoff bei 1600°C hergestellt werden. Bei dieser Temperatur wird das Kompositmaterial nur angesintert, was zu relativ niedrigen Festigkeitswerten führt. Bei der Anwendung des Stiftheizers, beispielsweise als Diesel-Starthilfe, ist ein solches Festigkeitsniveau nicht ausreichend. Unter den in der EP 0 601 727 beschrieben Herstellungsbedingungen ist ein vollständiges Durchsintern der angegebenen Kompositkeramik nicht möglich. Damit ist auch die Gasdichtheit der Stifte, die beispielsweise bei ihrer Anwendung als Glühstiftkerzeerfüllt sein muß, nicht gewährleistet.

In der DE 197 22 321 A1 und der DE 198 60 919 C1 wird ein Verfahren zur Herstellung eines Formkörpers mit einstellbarer elektrischer Leitfähigkeit aus einem keramischen Verbundgefüge beschrieben, das mindestens zwei Bestandteile unterschiedlicher elektrischer Leitfähigkeit, wie $Si_3N_4$ und ein Metallsilizid, enthält, wobei vor dem Sintern der Formkörper durch einen kaltisostatischen Formpreßschritt erzeugt wird. Ein Verfahren zur Herstellung eines Stiftheizers wird dort jedoch nicht genannt.

Die Aufgabe vorliegender Erfindung bestand darin, ein Verfahren zur Herstellung eines Stiftheizers bereitzustellen, der eine im wesentlichen innenliegende Isolationsschicht und eine außenliegende Leitschicht aufweist, der schnell aufheizt, der bis mindestens 1400°C thermisch und mechanisch hochbelastbar und gasdicht ist. Ferner sollen mit dem erfindungsgemäß hergestellten Stiftheizer nach Anlegen einer Spannung von 10-15 V Aufheizraten von $\geq 300$ K/s bis 900°C realisierbar sein. Ab 1400°C soll der Stiftheizer ein Abregelverhalten zeigen. Die Leistungsaufnahme des so hergestellten Stiftheizers soll ferner in der Anfangsphase 120 W nicht überschreiten.

Die Aufgabe wird erfindungsgemäß durch ein Verfahren zur Herstellung eines Stiftheizers gelöst, der eine im wesentlichen innenliegende Isolationsschicht und eine außenliegende Leitschicht aufweist, wobei beide Schichten ein keramisches Verbundgefüge umfassen, wobei das Verfahren dadurch gekennzeichnet ist, daß vor dem Sintern des Stiftheizers dessen Formgebung mittels der Keramikspritzgießtechnik oder durch kombiniertes Kaltaxial-/isostatisches Pressen erfolgt.

In einer bevorzugten Ausführungsform des Verfahrens werden als Bestandteile des keramischen Verbundgefüges Trisiliziumtetranitrid und ein Metallsilizid eingesetzt.

Besonders bevorzugt ist hierbei ein Verfahren, bei dem als Bestandteile des keramischen Verbundgefüges 30-70 Ma.-% $Si_3N_4$, 25-65 Ma.-% $MoSi_2$, 0-5 Ma.-% $Al_2O_3$ und 2-9 Ma.-% $Y_2O_3$ eingesetzt werden.

Die Herstellung des schnell aufheizenden Stiftheizers mit hoher Festigkeit umfaßt die Stufe seiner Formgebung und die seiner Sinterung.

Die Formgebung kann durch Keramikspritzgießtechnik oder durch kombiniertes Kaltaxial-/isostatisches Pressen erfolgen.

1. Formgebung durch Keramikspritzgießtechnik
(CIM = Ceramic Injection Molding)

Hierbei wird ein mit entsprechenden Sinteradditiven, wie $Al_2O_3$, $Y_2O_3$ versehenes vorkonditioniertes $Si_3N_4$-Pulver hergestellt. Dieses Pulver enthält 0-5 Ma.-%, vorzugsweise 4,3 Ma.-%, $Al_2O_3$ und 2-9 Ma.-%, vorzugsweise 5,7 Ma.-% $Y_2O_3$. Diesem wird $MSi_2$ zugemischt, wobei M Molybdän, Niob, Wolfram und Titan in unterschiedlichen Masseanteilen sein kann.

Die Zumischung von $MSi_2$ erfolgt so, daß nach dem Sinterbrand eine hoch isolierende Komponente und eine sehr gut leitfähige Komponente entsteht. Hierbei enthält die isolierende Komponente $MoSi_2$-Anteile im Bereich von 25-45 Ma.-% und die leitfähige Komponente 50-65 Ma.-%.

Daran schließt sich die Aufbereitung von spritzgießfähigen Polymercompounds aus den beiden Komponenten an. Hierunter versteht man verarbeitungsfertige Mischungen von Polymeren mit allen Additiven und Füllstoffen, die für die Herstellung der Endprodukte erforderlich sind. Diese Compounds werden aus den beiden vorkonditionierten keramischen Pulvermischungen mit einem geeigneten organischen Bindersystem hergestellt, das erfindungsgemäß aus gepfropften Polypropylenen in Kombination mit Cyclododecan und/oder Cyclododecanol besteht. Ferner sind als Bindersysteme zur Herstellung der spritzgießfähigen Compounds Kombinationen von Polyolefinwachsen, wie Hostamont® TPEK 583 der Ticona GmbH, oder Polyoxymethylene geeignet, wie Catamold® der BASF AG.

Spritzgießfähige Pulvercompounds stellen hochgefüllte Dispersionen dar. Ein für den Pulverspritzguß geeignetes Bindersystem muß folgende Anforderungen erfüllen:

- Dispersionswirkung zur Vermeidung von Pulveragglomeraten,
- gute Fließfähigkeit der aufgeschmolzenen Compounds beim Spritzgießen,
- ausreichende Haftung (Verschweißen) beim Überspritzen eines Formlings mit einem zweiten Compound,
- geringe Bildung von Pyrolysekohlenstoff beim thermischen Entbindern in Inertgasatmosphäre und an Luft, da Kohlenstoff die Eigenschaften der gesinterten Formkörper nachteilig beeinflußt und
- rasche Entbinderung ohne Bildung von Defekten.

Ein derartiges Bindersystem stellt beispielsweise die Kombination von gepfropften Polypropylenen mit Cyclododecan und/oder Cyclododecanol dar. Die auf die Polypropylenkette aufgepfropften polaren Verbindungen, wie Acrylsäure oder Maleinsäureanhydrid, koppeln an die Oberflächen der Pulver an.

Schließlich erfolgt das Spritzen des Isolationskörpers aus dem die isolierende Komponente enthaltenden Compound. Dieser Isolationskörper wird mit dem die leitfähige Komponente enthaltenden Compound durch Verbundspritzguß umspritzt, wobei ein Verschweißen der beiden Teilkörper erfolgt. Es kann auch in umgekehrter Weise verfahren werden.

Besonders vorteilhaft ist das Spritzen der die im Stiftheizer bildenden Isolations- und Leitschicht durch Zweikomponentenspritzguß.

Darin schließt sich ein vorzugsweise thermischer Entbinderungsprozeß und das Vorsintern unter Inertgas bei $10^5$ Pa bis 1200°C an.

2. Formgebung durch kombiniertes Kaltaxial-/isostatisches Pressen

Die Formgebung durch kombiniertes Kaltaxial-/isostatisches Pressen kann dabei auf die beiden im folgenden beschriebenen Verfahren durchgeführt werden.

Verfahren 2.1

Es wird zunächst ein vorkonditioniertes $Si_3N_4$-Pulver hergestellt. Dieses enthält Sinteradditive, wie $Al_2O_3$, $Y_2O_3$. Dem Pulver werden $MSi_2$, wobei M Molybdän, Niob, Wolfram oder Titan in unterschiedlichen Masseanteilen sein kann, zugemischt. Ferner werden ggf. organische Preß- und/oder Bindehilfsmittel, wie Polyvinylbutyrale, Polyvinylalkohole oder Polyvinylacetate, Polyethylenglycole, in einer Attritormühle in einem organischen Lösungsmittel, wie Ethanol, Propanol oder Isopropanol, zugesetzt. Das vorkonditionierte $Si_3N_4$-Pulver enthält 0-5 Ma.-%, vorzugsweise 4,3 Ma.-%, $Al_2O_3$ und 2-9 Ma.-%, vorzugsweise 5,7 Ma.-%, $Y_2O_3$.

Anschließend wird die attritierte Suspension im Rotationsverdampfer getrocknet. Das Zumischen des $MSi_2$ erfolgt dergestalt, daß eine nach dem Sinterbrand hoch isolierende Komponente und eine nach dem Sinterbrand hoch leitfähige Komponente entsteht. Dabei enthält die erstgenannt Komponente beispielsweise $MoSi_2$-Anteile im Bereich von 25-45 Ma.-%, die letztgenannte Komponente beispielsweise $MoSi_2$-Anteile im Bereich von 50-65 Ma.-%.

Die Herstellung des Heizers erfolgt so, daß zunächst in einem Axialpreßwerkzeug ein quaderförmiger Preßkörper der isolierenden Komponente bei einem geringen Druck axial vorgepreßt wird. Anschließend wird eine Teilmenge der leitfähigen Komponente als Pulverschüttung in ein weiteres Axialpreßwerkzeug mit Quaderprofil eingefüllt, dessen Abmessungen der schmalen Seite quer zur Preßrichtung um ca. 2-5 % gegenüber dem ersten Preßwerkzeug größer ist. Daran schließt sich das Einlegen des rechteckig vorgepreßten Teils in die Pulverschüttung der leitfähigen Komponente an, so daß auf einer Seite ein bündiger Abschluß und auf der anderen Seite ein Freiraum zum Befüllen mit einer zweiten Teilmenge der leitfähigen Komponente entsteht. Nun wird mit der letztgenannten Teilmenge aufgefüllt und der Schichtverbund mit einem Druck von $4\cdot10^7$ Pa axial vorgepreßt. Daran schließt sich ein kaltisostatisches Nachpressen des Schichtverbundes bei 200 MPa an. Der nachgepreßte Schichtverbund wird schließlich zu einem rotationssymmetrischen Körper durch Profilschleifen oder Drehen vor oder nach einer Entbinderung und/oder Vorsinterung unter Argon bei $10^5$ Pa und 1200°C ausgeformt.

Verfahren 2.2

Es erfolgt der Aufbau eines vorkonturierten, annähernd rotationssymmetrischen Heizers dergestalt, daß ein quaderförmiger Preßkörper der isolierenden Komponente bei einem geringen Preßdruck axial vorverdichtet wird. Anschließend wird eine Axialpreßmatrize mit einem konkav ausgeformten unteren Preßstempel mit einer Pulverschüttung der leitfähigen Komponente befüllt. Dann wird der vorgepreßte Teil der isolierenden Komponente so aufgelegt, daß der vorgepreßte Teil an einer Seite bündig abschließt und an der anderen Seite ein Hohlraum entsteht, worauf das Werkzeug nochmals mit der leitfähigen Komponente befüllt wird. Dieser Schichtverbund wird unter Verwendung eines konkav ausgeformten oberen Preßstempels mit einem Druck von $4 \cdot 10^7$ Pa gemeinsam verpreßt.

Diesem Preßvorgang schließt sich ein kaltisostatisches Verpressen des Schichtverbundes bei einem Druck von $2 \cdot 10^8$ Pa an. Danach wird der Heizer entbindert und/oder unter Inertgas bei $10^5$ Pa bis 1200°C vorgesintert.

Diesem Vorgang schließt sich ein Profilschleifen oder Drehen des Heizers bis zur Endgeometrie an.

3. Sinterverfahren

An alle Formgebungsprozesse schließt sich nach der Entbinderung und/oder Vorsinterung ein Hauptsintergang an. Dieser kann auf die im folgenden beschriebenen zwei Arten erfolgen.

Die Hauptsinterung (1) erfolgt unter einem definierten $N_2$-Partialdruck, wobei dieser im Sintergas zwischen 1000°C und der Sintertemperatur liegt, die nicht größer als 1900°C ist. Der $N_2$-Partialdruck beträgt nicht mehr als $10^6$ Pa und der Gesamtsinterdruck wird durch Zumischen eines Inertgases, beispielsweise Argon, auf Werte bis $10^7$ Pa erhöht.

Die Hauptsinterung (2) erfolgt unter einem definierten $N_2$-Partialdruck, wobei dieser mit der Temperatur so variiert werden muß, daß der Partialdruck innerhalb eines Bereiches liegt, der durch folgende Funktionen begrenzt wird und der Gesamtsinterdruck durch Zumischen eines Inertgases, beispielsweise Argon, auf Werte bis $10^7$ Pa erhöht wird.

$$\text{obere Grenze:} \qquad \log p(N_2) = 7{,}1566 \ln(T) - 52{,}719$$

$$\text{untere Grenze:} \qquad \log p(N_2) = 9{,}8279 \ln(T) - 73{,}988.$$

Die Angabe von T erfolgt in °C, die Angabe von $p(N_2)$ in $10^5$ Pa. Die Sintertemperatur liegt nicht höher als 1900°C.

Die durch das erfindungsgemäße Verfahren erhaltenen Komposite erreichen Dichten von >95% der Werkstoffdichte und zeigen das in der Tabelle zusammengefaßte Festigkeitsniveau.

Tabelle

| 4-Punkt-Biegefestigkeiten, gemessen bei 25°C und 1000°C sowie bei 25°C nach Auslagerung bei 1300°C an Luft | | | |
|---|---|---|---|
| Meßbedingungen Meßtemperatur/ Auslagerung | $\sigma$ 4Pkt. in MPa $Si_3N_4$ mit 30 Ma.-% $MoSi_2$ | $\sigma$ 4Pkt. in MPa $Si_3N_4$ mit 50 Ma.-% $MoSi_2$ | $\sigma$ 4Pkt. in MPa $Si_3N_4$ mit 70 Ma.-% $MoSi_2$ |
| 25°C/ keine | 550 | 486 | 414 |
| 25°C/ 250h bei 1300°C an Luft | 455 | 444 | 330 |
| 25°C/ 500h bei 1300°C an Luft | 400 | 380 | 311 |
| 25°C/ 1000h bei 1300°C an Luft | 502 | 465 | 374 |
| 1000°C / keine | 510 | 420 | 350 |

Vorteile der Erfindung

Die erfindungsgemäß hergestellten rotationssymmetrischen keramischen Stiftheizer sind bis mindestens 1400°C thermisch und mechanisch hoch belastbar und gasdicht. Mit diesen keramischen Heizern sind nach Anlagen von 10-15V Aufheizraten von $\geq$ 300K/s bis 900°C realisierbar. Sie zeigen ab 1400°C ein Abregelverhalten. Die Leistungsaufnahme des Heizers in der Anfangsphase überschreitet nicht mehr als 100W.

Diese Vorteile des nach dem erfindungsgemäßen Verfahren hergestellten Stiftheizers gegenüber Stiftheizern des Standes der Technik werden auch durch den Einsatz eines Inertgasdrucksinterverfahrens ermöglicht, wodurch größere Gestaltungsfreiräume gegenüber axial heißgepreßten Verbundkörpern möglich werden. Aufgrund der Möglichkeit, die geforderte Geometrie des Stiftheizers entweder durch Grünbearbeitung oder durch Verwendung spezieller Preßwerkzeuge oder durch Spritzguß endkonturnah zu realisieren, entfällt eine aufwendige Hartbearbeitung, wie sie bei einem durch Heißpressen hergestellten Stiftheizers erforderlich ist.

Zeichnung

Das erfindungsgemäße Verfahren wird nachfolgend durch die Zeichnung erläutert. Es zeigen:

- Fig. 1 die wesentlichen Schritte zur Herstellung des Stiftheizers auf der Basis der $Si_3N_4$-Komposite durch Verbundpressen,
- Fig. 2 den Schritt zur Formgebung des Stiftheizers,
- Fig. 3 die wesentlichen Schritte zur Herstellung des Stiftheizers auf der Basis der $Si_3N_4$-Komposite mittels einer konkav ausgeformten Preßmatritze,

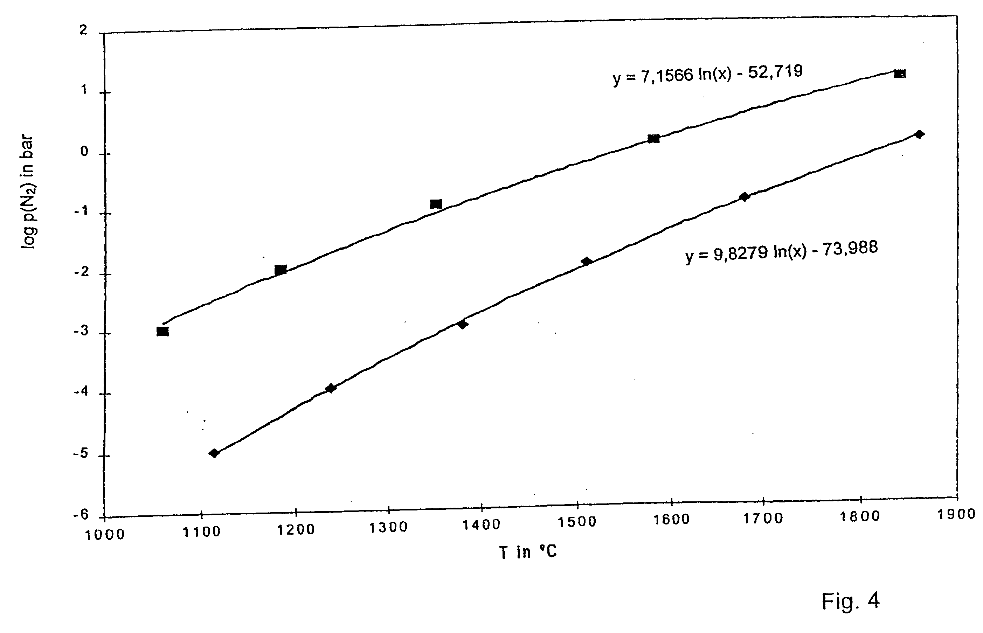

- Fig. 4 die Darstellung des Druckbereichs gemäß Hauptsinterung (2), der in Abhängigkeit von der Temperatur bei der Herstellung spezieller leitfähiger $Si_3N_4/MoSi_2$-Komposite eingestellt werden muß und
- Fig. 5 Aufheizverhalten des erfindungsgemäß hergestellten keramischen Stiftheizers gemäß Beispiel 1.

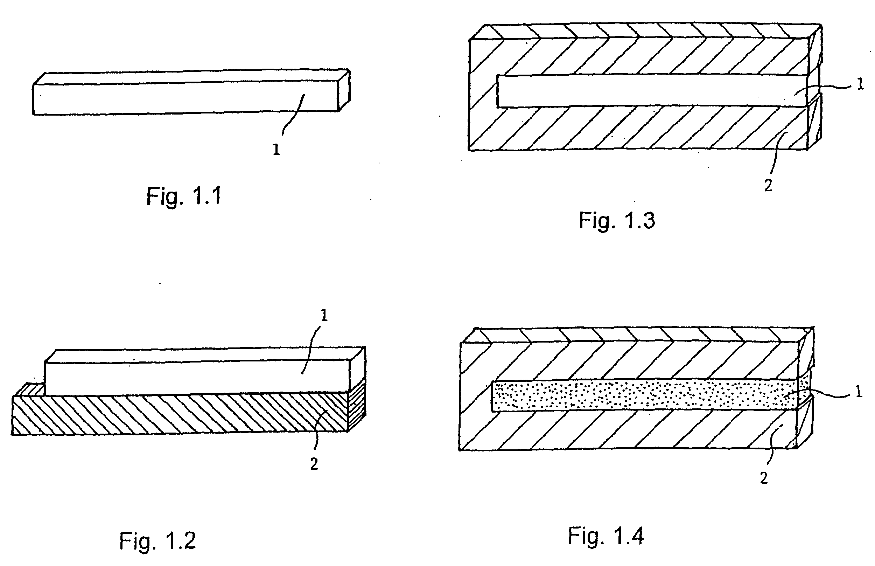

Die Fig. 1.1 zeigt die quaderförmig vorgepreßte, isolierende Komponente 1, die Fig. 1.2 das Einlegen dieser Komponente 1 auf eine quaderförmige Pulverschüttung der leitfähigen Komponente 2. Die Fig. 1.3 zeigt das Auffüllen mit der leitfähigen Komponente 2 und die Fig. 1.4 das kaltisostatische Verdichten.

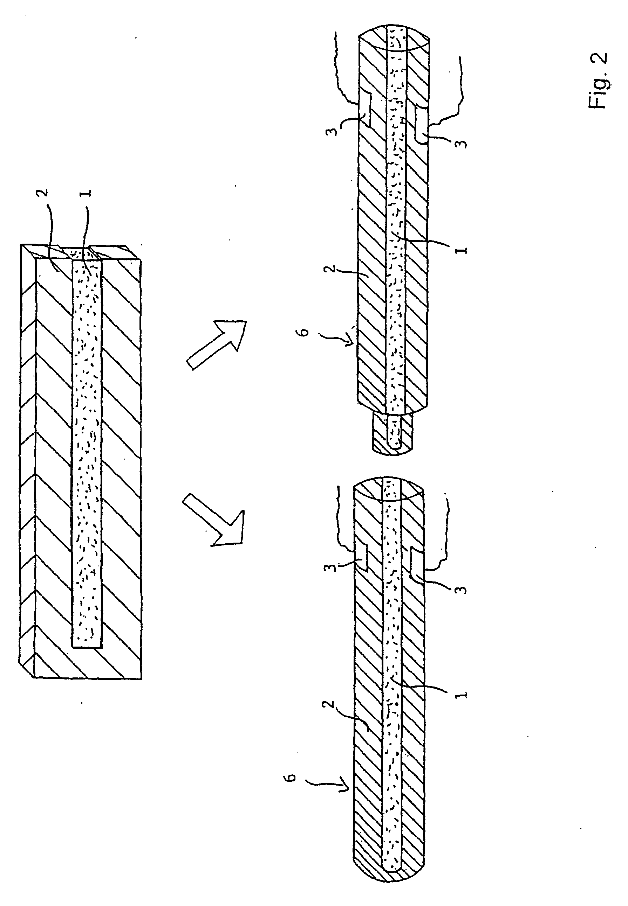

Die Fig. 2 zeigt den Schritt zur Formgebung des erfindungsgemäßen Stiftheizers 6, was durch Profilschleifen oder Drehen erreicht wird. Der Stiftheizer 6 weist eine äußere aus der leitfähigen Komponente 2 bestehenden Leitschicht und eine im wesentlichen innenliegende aus der isolierenden Komponente 1 bestehenden Isolationsschicht auf. Die Leitschicht ist mit einer Kontaktierung 3 versehen. Die Fig. 2 zeigt ferner zwei verschieden geformte Ausgestaltungen des erfindungsgemäßen Stiftheizers 6.

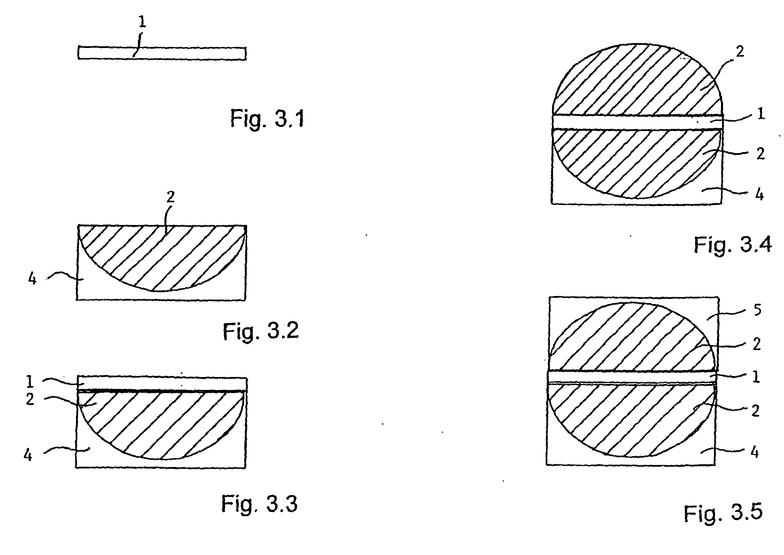

Die Fig. 3.1 zeigt in schematischer Darstellung die vorgepreßte isolierende Komponente 1. Die Fig. 3.2 zeigt einen unteren konkav ausgebildeten Preßstempel 4, der mit der leitfähigen Komponente 2 befüllt ist. Die Fig. 3.3 zeigt das Auflegen der isolierenden Komponente 1 auf die Komponente 2. Die Fig. 3.4 zeigt das nochmalige Befüllen mit der Komponente 2 und die Fig. 3.5 zusätzlich den oberen Preßstempel 5.

Beschreibung der Ausführungsbeispiele

Beispiel 1

Zur Herstellung eines Compounds aus der leitfähigen Komponente 2 wurden 82 Ma.-% des vorkonditionierten Pulvergemisches der leitfähigen Komponente 1 mit 12 Ma.-% Polybond® 1001 und 6 Ma.-% Cyclododecan unter Schutzgas bei 180°C geknetet und durch Abkühlen bei laufendem Kneter granuliert. Bei dem eingesetzten Polypropylen Polybond® 1001 handelte es sich um ein mit 6% Acrylsäure gepfropftes Homo-Polypropylen der Fa. Uniroyal Chemical.

Auf dieselbe Art wurde ein Compound mit der isolierenden Komponente 1 hergestellt, dessen Füllstoffgehalt derart an den des Compounds mit der leitfähigen Komponente 2 angepaßt war, daß aus beiden Compounds spritzgegossene und entbinderte Probekörper unter gleichen Sinterbedingungen dieselbe Sinterschwindung aufwiesen. Dies wurde beispielsweise dadurch erreicht, daß der Compound mit der isolierenden Komponente 1 aus 83 Ma.-% des vorkonditionierten Pulvers dieser Komponente 1, 11 Ma.-% Polybond® und 6 Ma.-% Cyclododecan bestand.

Durch Verbundspritzguß wurden die Teilkörper des Stiftheizers 6 aus dem Compound der isolierenden Komponente 1 und dem Compound der leitfähigen Komponente 2 geformt und dabei miteinander verschweißt. Welche der beiden Komponenten zuerst spritzgegossen wird, richtet sich nach dem gewählten Aufbau des Spritzgießwerkzeugs.

Nach dem thermischen Entbindern und der Sinterung gemäß Hauptsinterung (2) weist der die isolierende Komponente 1 enthaltende Compound einen spezifischen Widerstand von $10^7$ $\Omega$cm, der die leitfähige Komponente 2 enthaltende Compound einen spezifischen Widerstand von $6 \cdot 10^{-3}$ $\Omega$cm auf.

Beispiel 2

Es wurde eine isolierende Komponente 1 hergestellt, bestehend aus 54 Ma.-% $Si_3N_4$, 2,58 Ma.-% $Al_2O_3$, 3,42 Ma.-% $Y_2O_3$ und 40 Ma.-% $MoSi_2$, wobei die mittlere Korngröße des eingesetzten $Si_3N_4$ 0,7 µm und die des $MoSi_2$ 1,8 µm betrug. Die Komponente 1 wird nach Zusatz von 0,5 Ma.-% eines Polyvinylbutyral-Preßhilfsmittels mit 30 MPa in einem Axialpreßwerkzeug vorgepreßt und in einem zweiten Axialpreßwerkzeug auf eine Pulverschüttung der leitfähigen Komponente 2 entsprechend Fig. 1 aufgelegt. Die isolierende Komponente 1 bestand dabei aus 36 Ma.-% $Si_3N_4$, 1,72 Ma.-% $Al_2O_3$, 2,28 Ma.-% $Y_2O_3$ und 60 Ma.-% $MoSi_2$. Die mittlere Teilchengröße des verwendeten $Si_3N_4$ betrug 0,7 µm, die des eingesetzten $MoSi_2$ 1,8 µm. Der leitfähigen Komponente 2 wurden ebenfalls 0,5 Ma.-% Polyvinylbutyral zugesetzt. Nach Einlegen der vorgepreßten isolierenden Komponente 1 wurde mit der leitfähigen Komponente 2 aufgefüllt und durch Axialpressen ein Schichtverbund hergestellt. Der Schichtverbund aus den beiden Komponenten 1 und 2 wurde unter einem Druck von 200 MPa kaltisostatisch nachverdichtet. Der Schichtverbund wurde nach einem Vorsinterbrand bei 1200°C durch Drehen zu einem rotationssymmetrischen Körper bearbeitet. Die Sinterung erfolgte nach Hauptsinterung (1), wobei der Gesamtdruck des Sintergases $10^6$ Pa betrug und eine vierstündige Sinterphase bei 1800°C eingehalten wurde. Die isolierende Komponente 1 wies nach der Sinterung einen spezifischen elektrischen Widerstand von $1 \cdot 10^7$ Ωcm, die leitfähige Komponente 2 einen Widerstand $4 \cdot 10^{-4}$ Ωcm bei Raumtemperatur auf.

Beispiel 3

Die isolierende Komponente 1, die aus 58,5 Ma.-% $Si_3N_4$, 2,79 Ma.-% $Al_2O_3$, 3,70 Ma.-% $Y_2O_3$ und 35 Ma.-% $MoSi_2$ bestand, wobei die mittlere Korngröße des eingesetzten $Si_3N_4$ 0,7 µm und die des $MoSi_2$ 1,8 µm betrug, wurde nach Zusatz von 0,5 Ma.-% Polyvinylbutyral als Preßhilfsmittel, wie in Beispiel 2 beschrieben, mit 30 MPa vorverdichtet. Die leitfähige Komponente 2, bestehend aus 45,0 Ma.-% $Si_3N_4$, 1,94 Ma.-% $Al_2O_3$, 2,57 Ma.-% $Y_2O_3$ und 50 Ma.-% $MoSi_2$, wobei die mittlere Korngröße des eingesetzten $Si_3N_4$ 0,7 µm und die des eingesetzten $MoSi_2$ 1,8 µm betrug, wurde in eine Axialpreßmatritze mit konkav ausgeformten unteren Preßstempeln 4 eingefüllt. Danach wurde die vorgepreßte isolierende Komponente 1 aufgelegt, weiteres Pulver der leitfähigen Komponente 2 aufgefüllt und mit einem konkav ausgebildeten oberen Preßstempel 5 axial vorverdichtet und kaltisostatisch nachverdichtet. Die Sinterung erfolgte gemäß Hauptsinterung (2), wobei der Gesamtdruck während der Sinterphase $10^6$ Pa betrug und eine vierstündige Sinterphase bei 1800°C eingehalten wurde. Die isolierende Komponente 1 wies nach der Sinterung einen spezifischen elektrischen Widerstand von $1 \cdot 10^8$ Ωcm, die leitfähige Komponente 2 einen Widerst and von $6 \cdot 10^{-3}$ Ωcm bei Raumtemperatur auf.

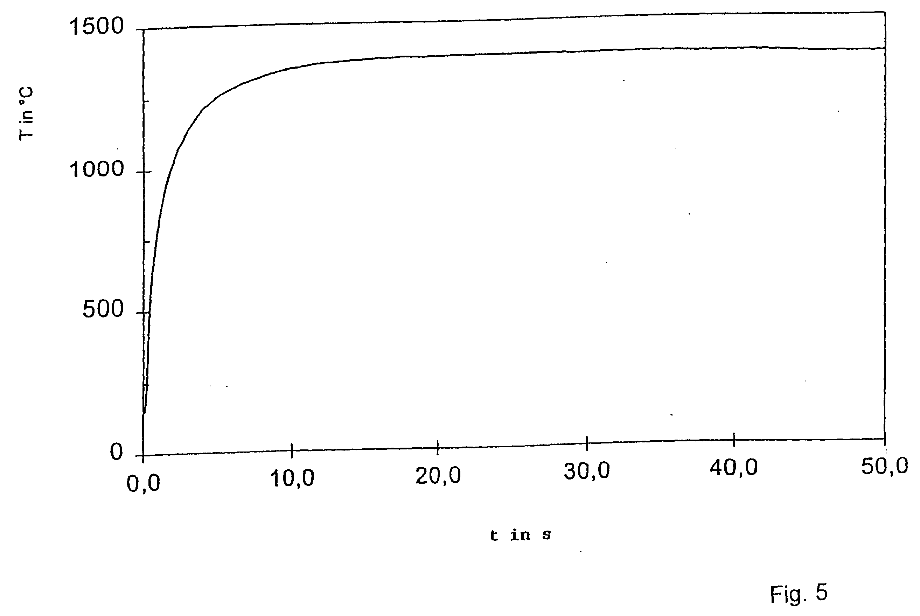

Die Fig. 5 zeigt die Temperatur-Zeit-Kurve des gemäß diesem Beispiel hergestellten Stiftheizers nach Anlegen einer Spannung von 11V. Der Widerstand betrug 1,2 Ω, die Stromstärke am Anfang ca. 8 A, am Ende 4,4 A, die Temperatur T nach 2 s 1037°C, die maximale Temperatur 1383°C, wobei eine Temperatur von 950°C nach 1,6 s erreicht wurde.

**Patentansprüche**

1. Verfahren zur Herstellung eines Stiftheizers (6), der eine im wesentlichen innenliegende Isolationsschicht und eine außenliegende Leitschicht aufweist, wobei beide Schichten ein keramisches Verbundgefüge umfassen, **dadurch gekennzeichnet, dass** in einer ersten Stufe eine Formgebung des Stiftheizers vorgenommen wird und in einer zweiten Stufe ein Sintern desselben, und dass vor dem Sintern des Stiftheizers (6) dessen Formgebung mittels der Keramikspritzgießtechnik oder durch kombiniertes Kaltaxial-isostatisches Pressen erfolgt.

2. Verfahren zur Herstellung eines Stiftheizers (6) nach Anspruch 1, **dadurch gekennzeichnet, daß** als Bestandteile des keramischen Verbundgefüges Trisiliziumtetranitrid und ein Metallsilizid eingesetzt werden.

3. Verfahren zur Herstellung eines Stiftheizers (6) nach Anspruch 2, **dadurch gekennzeichnet, daß** als Bestandteile des keramischen Verbundgefüges 30-70 Ma.-% $Si_3N_4$, 25-65 Ma.-% $MoSi_2$, 0-5 Ma.-% $Al_2O_3$ und 2-9 Ma.-% $Y_2O_3$ eingesetzt werden.

4. Verfahren zur Herstellung eines Stiftheizers (6) nach einem der vorhergehenden Ansprüche, dessen Formgebung mittels der keramischen Spritzgießtechnik erfolgt, **dadurch gekennzeichnet, dass** das Verfahren folgende Schritte umfaßt:

a) Herstellung des nach der Sinterung isolierenden Verbundgefüges durch einen Metallsilizidanteil des Verbundgefüges von 25-45 Ma.-% und Herstellung des nach der Sinterung leitenden Verbundgefüges durch einen Metallsilizidanteil des Verbundgefüges von 50-65 Ma.-%,

b) Herstellung einer spritzgießfähigen Mischung aus einem Bindersystem mit dem isolierenden Verbundgefüge und Herstellung einer spritzgießfähigen Mischung aus einem Bindersystem mit dem leitenden Verbundgefüge,

c) Spritzen der Isolationsschicht und der Leitschicht,

d) Entbindern und Vorsintern des Schichtverbundes und

e) Hauptsinterung des Schichtverbundes.

5. Verfahren zur Herstellung eines Stiftheizers (6) nach Anspruch 4, **dadurch gekennzeichnet, daß** das Bindersystem Polyolefinwachse, Polyoxymethylene oder gepfropfte Polypropylene in Kombination mit Cyclododecan und/ oder Cyclododecanol umfaßt.

6. Verfahren zur Herstellung eines Stiftheizers (6) nach einem der Ansprüche 1-3, dessen Formgebung durch kombiniertes Kaltaxial-/isostatisches Pressen erfolgt, **dadurch gekennzeichnet, daß** das Verfahren folgende Schritte umfaßt:

a) Herstellung des nach der Sinterung isolierenden Verbundgefüges durch einen Metallsilizidanteil des Verbundgefüges von 25-45 Ma.-% und Herstellung des nach der Sinterung leitenden Verbundgefüges durch einen Metallsilizidanteil des Verbundgefüges von 50-65 Ma.-%,

b) axiales Vorpressen des isolierenden Verbundgefüges,

c) Herstellung eines Schichtverbundes aus dem isolierenden und dem leitenden Verbundgefüge,

d) Vorpressen des Schichtverbundes,

e) kaltisostatisches Nachpressen des Schichtverbundes,

f) Profilschleifen oder Drehen des Schichtverbundes vor oder nach einer Entbinderung und/oder Vorsinterung und

g) Hauptsinterung des Schichtverbundes.

7. Verfahren zur Herstellung eines Stiftheizers (6) nach Anspruch 6, **dadurch gekennzeichnet, daß** ein Axialpreßwerkzeug mit Quadergeometrie eingesetzt wird.

8. Verfahren zur Herstellung eines Stiftheizers (6) nach Anspruch 6, **dadurch gekennzeichnet, daß** als Axialpreßwerkzeug ein konkav ausgebildeter Preßstempel (4; 5) eingesetzt wird.

**Claims**

1. Process for producing a glow plug heater (6) which has a substantially inner insulating layer and an outer conductive layer, the two layers comprising a ceramic composite structure, **characterized in that** in a first stage the glow plug heater is shaped, and in a second stage it is sintered, and **in that** the glow plug heater (6) is shaped by means of the ceramic injection-moulding technique or by combined cold axial-isostatic pressing before it is sintered.

2. Process for producing a glow plug heater (6) according to Claim 1, **characterized in that** trisilicon tetranitride and a metal silicide are used as constituents of the ceramic composite structure.

3. Process for producing a glow plug heater (6) according to Claim 2, **characterized in that** 30-70% by mass of $Si_3N_4$, 25-65% by mass of $MoSi_2$, 0-5% by mass of $Al_2O_3$ and 2-9% by mass of $Y_2O_3$ are used as constituents of the ceramic composite structure.

4. Process for producing a glow plug heater (6) according to one of the preceding claims, the shaping of which is carried out by means of the ceramic injection-moulding technique, **characterized in that** the process comprises the following steps:

a) production of the composite structure which has an insulating action after the sintering step by means of a metal silicide fraction of the composite structure of 25-45% by mass and production of the composite structure which is conductive after the sintering step by means of a metal silicide fraction of the composite structure of 50-65% by mass,

b) production of an injection-mouldable mixture comprising a binder system together with the insulating composite structure and production of an injection-mouldable mixture comprising a binder system together with the conductive composite structure,

c) injection moulding of the insulating layer and of the conductive layer,

d) removal of the binder from and preliminary sintering of the layer composite, and

e) main sintering of the layer composite.

**5.** Process for producing a glow plug heater (6) according to Claim 4, **characterized in that** the binder system comprises polyolefin waxes, polyoxymethylenes or grafted polypropylenes in combination with cyclododecane and/or cyclododecanol.

**6.** Process for producing a glow plug heater (6) according to one of Claims 1-3, which is shaped by combined cold axial-isostatic pressing, **characterized in that** the process comprises the following steps:

a) production of the composite structure which has an insulating action after the sintering step by means of a metal silicide fraction of the composite structure of 25-45% by mass and production of the composite structure which is conductive after the sintering operation by means of a metal silicide fraction of the composite structure of 50-65% by mass,

b) axial pre-pressing of the insulating composite structure,

c) production of a layer composite from the insulating composite structure and the conductive composite structure,

d) pre-pressing of the layer composite,

e) cold isostatic re-pressing of the layer composite,

f) profile grinding or turning of the layer composite before or after binder removal and/or presintering, and

g) main sintering of the layer composite.

**7.** Process for producing a glow plug heater (6) according to Claim 6, **characterized in that** an axial press tool with a cuboidal geometry is used.

**8.** Process for producing a glow plug heater (6) according to Claim 6, **characterized in that** a concave press ram (4; 5) is used as the axial press tool.

**Revendications**

**1.** Procédé de production d'une tige chauffante (6) qui présente une couche isolante essentiellement intérieure et une couche conductrice extérieure, les deux couches formant une structure composite céramique,
**caractérisé en ce que**
dans une première étape est réalisé le formage de la tige chauffante et dans une deuxième étape un frittage de celle-ci, et qu'avant le frittage de la tige chauffante (6), son formage se fait au moyen de la technique du moulage par injection de céramique ou par compression axiale à froid/isostatique combinée.

**2.** Procédé de production d'une tige chauffante (6) selon la revendication 1,
**caractérisé en ce que**
du tétraniture de trisilicium et un siliciure métallique sont utilisés comme composants de la structure composite céramique.

**3.** Procédé de production d'une tige chauffante (6) selon la revendication 2,
**caractérisé en ce que**
30 à 70 % en poids de $Si_3N_4$, 25 à 65 % en poids de $MoSi_2$, 0 à 5 % en poids de $Al_2O_3$ et 2 à 9 % en poids de $Y_2O_3$ sont utilisés comme composants de la structure composite céramique.

**4.** Procédé de production d'une tige chauffante (6) selon une des revendications précédentes, dont le formage se fait au moyen de la technique du moulage par injection de céramique,
**caractérisé en ce que**
le procédé comprend les étapes suivantes :

a) fabrication de la structure composite isolante après le frittage avec une proportion de siliciure métallique de la structure composite de 25 à 45 % en poids et fabrication de la structure composite conductrice après le frittage avec une proportion de siliciure métallique de la structure composite de 50 à 65 % en poids,
b) fabrication d'un mélange moulable par injection fait d'un système liant avec la structure composite isolante et fabrication d'un mélange moulable par injection fait d'un système liant avec la structure composite conductrice,
c) injection de la couche isolante et de la couche conductrice,
d) élimination du liant et frittage préliminaire du composite laminaire et
e) frittage principal du composite laminaire.

5. Procédé de production d'une tige chauffante (6) selon la revendication 4,
**caractérisé en ce que**
le système liant comprend des cires de polyoléfiniques, des polyoxyméthylènes ou des polypropylènes greffés en combinaison avec du cyclododécane et/ou du cyclododécanol.

6. Procédé de production d'une tige chauffante (6) selon une des revendications 1 à 3, dont le formage se fait par compression isostatique/axial à froid combinée,
**caractérisé en ce que**
le procédé comprend les étapes suivantes :

a) fabrication de la structure composite isolante après le frittage avec une proportion de siliciure métallique de la structure composite de 25 à 45 % en poids et fabrication de la structure composite conductrice après le frittage avec une proportion de siliciure métallique de la structure composite de 50 à 65 % en poids,
b) compression préliminaire axiale de la structure composite isolante,
c) fabrication d'un composite laminaire à partir de la structure isolante et de la structure conductrice,
d) compression préliminaire du composite laminaire,
e) recompression isostatique à froid du composite laminaire,
f) profilage ou tournage du composite laminaire avant ou après une élimination du liant et/ou un frittage préliminaire et
g) frittage principal du composite laminaire.

7. Procédé de production d'une tige chauffante (6) selon la revendication 6,
**caractérisé en ce qu'**
un outil de compression axiale à géométrie parallélépipédique est utilisé.

8. Procédé de production d'une tige chauffante (6) selon la revendication 6,
**caractérisé en ce que**
l'outil de compression axiale utilisé est un plateau de compression de forme concave (4, 5).

Fig. 1.3

Fig. 1.4

Fig. 1.1

Fig. 1.2

Fig. 2

EP 1 056 690 B1

Fig. 3.4

Fig. 3.5

Fig. 3.1

Fig. 3.2

Fig. 3.3

Fig. 4

EP 1 056 690 B1

Fig. 5